# EUROPEAN PATENT APPLICATION

(11) **EP 2 482 556 A1**
(43) Date of publication of application: **01.08.2012**
(21) Application number: 10852390.3
(22) Date of filing: 23.08.2010
(51) Int. Cl.: H04N 7/173, H04H 60/72, H04H 60/25

(54) **METHOD AND TERMINAL FOR BROADCASTING MOBILE TELEVISION SERVICE**

(30) Priority: 01.06.2010 CN 201010191669
(71) Applicant: ZTE Corporation, Shenzhen, Guangdong 518057 (CN)
(72) Inventor: MA, Hongqiang, Shenzhen Guangdong 518057 (CN)
(74) Representative: Krauns, Christian
(86) International application number: PCT/CN2010/076262
(87) International publication number: WO 2011/150594

(57) **Abstract**

The present invention discloses a method and a terminal for broadcasting a mobile television service. The mobile terminal includes: a human-machine interactive interface, a control module, a China Mobile Multimedia Broadcasting (CMMB) module and a Service Guide (SG) module; and the method includes: the terminal acquiring available frequency point information in a network via a full-frequency scan and downloading the Continual Service Multiplex Configuration Table (CMCT) of each available frequency point, when judging that at least one frequency point number is invalid in the SG; after a user selects a service in the SG, the terminal searching for the corresponding frequency point number in the content of the CMCT according to the service identification information of a service, if judging that the frequency point number corresponding to the service in the SG is invalid; and then the terminal processing in accordance with the existing playing flow based on the found frequency point number. After the present invention is adopted, services can be broadcasted normally even if frequency point information is incorrectly configured in some area such as a county-level city, thus giving the user a good user experience.

## Description

### Technical Field

The present invention relates to the field of the mobile multimedia broadcasting and mobile phone television, and in particular, to a method and a system for broadcasting a mobile television service.

### Background of the Related Art

A mobile, also known as a mobile phone, is a wireless access terminal. Because of its convenient mobile features, the mobile brings about a profound change for the people's daily lives.

CMMB is the English abbreviation of China Mobile Multimedia Broadcasting. The CMMB is mainly for mobile phones and other multimedia mobile devices, and has become the main trend of the mobile television at present, since the CMMB has the advantages of a low cost of building a network, implementing a seamless and collaborative cover with a combination of satellite transmission with terrestrial networks and possessing an independent intellectual property right.

MBBMS is the English abbreviation of Mobile Broadcast Business Management System. The system is mainly used in a mobile network to realize service management functions such as an encryption and authorization for a CMMB mobile TV user, and a user management and so on. With the management system, the Administration of Radio, Film and Television and China Mobile can join hands to promote the CMMB broadcast television.

SG is the English abbreviation of Service Guide, refers to an electronic business guide in MBBMS services of the China Mobile. A SG server distributes the SG synchronized from the side of a radio, film and television network to the terminal, and the SG should comprises parameters (such as a channel number, frequency point number, and so on) needed by a receiving channel as well as information (such as an interactive content, a timing advance, and an interaction server address, and so on) required by an interaction, in addition to information (such as channel information, a program introduction, payment information, and so on) that can be displayed to a user. However, the frequency point numbers of a certain one or some channels are not configured or are incorrectly configured in the SG for some reasons, thus leading to the result that a terminal cannot receive the data of the channel according to the number of the frequency point where the channel locates in the SG to play the program of the channel for a user, when a user selects to broadcast the channel.

### Summary of the Invention

The present invention provides a method and a terminal for broadcasting a mobile television service, so as to solve the problem that programs cannot be normally played in the case of frequency point information configuration errors or inconsistencies in a SG sent from the existing network side.

In order to solve the aforementioned problem, the present invention provides a method for broadcasting a mobile television service, and the method comprises:
a terminal acquiring available frequency point information in a network via a full-frequency scan and downloading a Continual service Multiplex Configuration Table (CMCT) of each available frequency point, when judging that at least one frequency point number is invalid in a local service guide (SG);
after a user selects a service in the SG, the terminal searching for the frequency point number corresponding to service identification information in content of the CMCT according to the service identification information of a service, if judging that the frequency point number corresponding to the service in the SG is invalid, and then processing in accordance with an existing playing flow based on the found frequency point number.

After the step of the terminal searching for the frequency point number corresponding to the service identification information in the content of the CMCT according to the service identification information of the service, the method further comprises:
the terminal updating a value of the frequency point number corresponding to the service identification information in the SG with a value of the found frequency point number.

The above method further comprises:
the terminal processing in accordance with the existing playing flow based on the frequency point number, if judging that the frequency point number in the SG corresponding to the service selected by the user is valid.

After the step of the terminal downloading the CMCT, the method further comprises: the terminal using the service identification information as indexes, and updating frequency point numbers in the SG according to the CMCT.

The method further comprises:
the terminal prompting the user of playing failure, if not finding the frequency point number corresponding to the service identification information in the content of the CMCT according to the service identification information.

In the aforementioned method, the step of downloading the CMCT of each available frequency point might comprise: the terminal saving all the content of the CMCTs corresponding to all the available frequency points into a same file or table;
the step of the terminal searching for the frequency point number corresponding to the service identification information in the content of the CMCT according to the service identification information might comprise: the terminal searching for the frequency point number corresponding to the service identification information in the file or table, in which the content of the CMCT is stored, according to the service identification information.

The step of processing in accordance with the existing playing flow based on the found frequency point number might comprise:
the terminal judging whether a currently locked frequency point number is the same as the found frequency point number or not, if yes, playing the service; otherwise, locking the frequency point corresponding to the found frequency point number again, and then performing the broadcasting process under the re-locked frequency point.

The present invention also provides a mobile terminal, which comprises: a human-machine interactive interface, a control module, a China Mobile Multimedia Broadcasting (CMMB) module and a Service Guide (SG) module;
the control module is configured: to save a SG updated and downloaded from a SG sever at a network side; and to acquire available frequency point information in the current network via a full-frequency scan, after receiving a scanning command, and then to download a Continual service Multiplex Configuration Table (CMCT) of each available frequency point;
the SG module is configured to initiate the scanning command to the control module, after judging that at least one frequency point number is invalid in the SG stored in the control module;
the human-machine interactive interface is configured: to display the SG stored in the control module to a user; and to send service identification information of a service to the CMMB module via the control module, when a user selects a service in the SG on the human-machine interactive interface;
the CMMB module is configured to search for the frequency point number corresponding to the service identification information in the SG stored in the control module according to the service identification information of the received service, and to judge whether the found frequency point number is valid or not; if invalid, to search for the frequency point number corresponding to the service identification information in content of the CMCT according to the service identification information, and to process in accordance with an existing playing flow based on the found frequency point number.

In the aforementioned mobile terminal, the CMMB module is further configured to update the value of the frequency point number corresponding to the service identification information in the SG with the value of the found frequency point number, after finding the frequency point number corresponding to the service identification information in the content of the CMCT according to the service identification information.

The control module is further configured to use the service identification information as indexes, to update the frequency point numbers in the SG according to the CMCT, after downloading the CMCT.

The control module is further configured to download the CMCT of each available frequency point in the following way of: saving all the content of the CMCTs corresponding to all the available frequency points into a same file or table; and
the CMMB module is configured to search for the frequency point number corresponding to the service identification information in the content of the CMCT according to the service identification information in the following way of: searching for the frequency point number corresponding to the service identification information in the file or table, in which the content of the CMCT is stored, according to the service identification information.

After the present invention is adopted, services can be broadcasted normally even if frequency point information is incorrectly configured in some area such as a county-level city, thus giving the user a good user experience; additionally, the time can be saved since the terminal checks the correctness of frequency point information in a SG as soon as it starts up.

### Brief Description of Drawings

FIG. 1 is a structural diagram of a terminal of the present invention;
FIG. 2 is a flow chart of a method in accordance with the present invention.

### Preferred Embodiments of the Present Invention

The present invention provides a method for a terminal to automatically match the content in a CMCT (Continual service Multiplex Configuration Table) obtained from the side of the radio, film and television network after scanning the frequencies using the service identification information (such as a service ID), so as to acquire the frequency point of the service, and to lock the frequency to play.

The basic idea of the present invention is:
In step 1, a terminal acquires available frequency point information in the current network via a full-frequency scan (that is scanning from the lowest frequency point to the highest frequency point, and recording all of the available frequency point information in the current network) and downloads the CMCT of each available frequency point, when judging that at least one frequency point number is invalid in the local SG;
In accordance with the existing specification, the value of the number configured for each frequency point should be within a reasonable range (such as from 13 to 49), and the value of the number of a certain frequency point is considered to be invalid when the value of the number of the frequency point exceeds the range or the value of the number of the frequency point is null (for example the network side does not assign any value to the number of the frequency point).

In the specific implementation, the information of each CMCT table can be extracted after the CMCT of each available frequency point is downloaded, and is saved in the same file or table, so as to be retrieved subsequently.

In addition, since a corresponding relationship between the frequency point number of the frequency point and the service identification information of all the services under the frequency is stored in the CMCT, and the corresponding relationship is also stored in the SG, after downloading the CMCT, the terminal can update the number value of the frequency point whose number is configured to be invalid in the SG according to the corresponding relationship in the CMCT, thus achieving the effect of correcting the frequency point configuration errors of certain frequency points in the SG.

In step 2, after a user selects a service in the SG, the terminal searches for the corresponding frequency point number in the local SG according to the service identification information of the service, and then judges whether the found frequency point number is valid or not; if it is valid, the terminal processes in accordance with the existing playing flow; otherwise, proceed to step 3;
the existing playing flow comprises the following steps:
   A. the terminal judges whether the currently locked frequency point is the same as the found frequency point (that is judging whether their number values are the same or not), if yes, plays the service; otherwise, proceed to step B;
   B. the terminal locks the found frequency point again, and then performs the playing process under the re-locked frequency point.

In step 3, the terminal searches for the corresponding frequency point number in the local CMCT according to the above service identification information, if the corresponding frequency point number is found, processes in accordance with the existing playing flow, and can update the value of the frequency point number corresponding to the service with the value of the found frequency point number, so as to achieve the effect of correcting the error of the SG; if not, prompts the user of playing failure, and ends up.

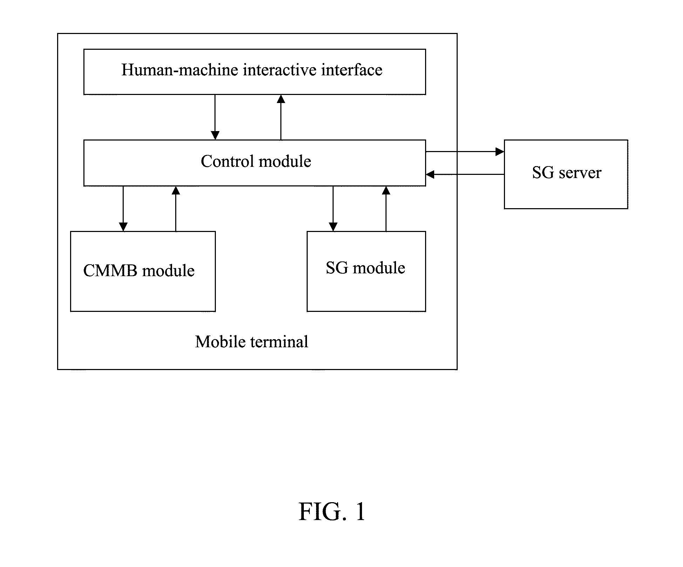

As shown in FIG. 1, the mobile terminal of the present invention comprises: a human-machine interactive interface, a control module, a China Mobile Multimedia Broadcasting (CMMB) module and a Service Guide (SG) module;
the control module is configured: to save a SG updated and downloaded from a SG sever at the network side; and to acquire available frequency point information in the current network via a full-frequency scan, after receiving a scanning command, and then to download the Continual service Multiplex Configuration Table (CMCT) of each frequency point;
the SG module is configured to initiate a scanning command to the control module, after judging that there are at least one frequency point number invalid in the SG stored in the control module;
the human-machine interactive interface is configured: to display the SG stored in the control module to a user; and to send the service identification information of the service to the CMMB module via the control module, after a user selects a service in the SG on the human-machine interactive interface;
the CMMB module is configured to search for the corresponding frequency point number in the SG stored in the control module according to the service identification information of the received service, and to judge whether the value of the found frequency point number is valid or not; if invalid, to find the corresponding frequency point number in the content of the CMCT according to the service identification information, and to process in accordance with the existing playing flow based on the found frequency point number.

In addition, the CMMB module is further configured to update the value of the frequency point number corresponding to the service identification information in the SG with the value of the found frequency point number, after finding the corresponding frequency point number in the content of the CMCT according to the service identification information.

The control module is further configured to use the service identification information as indexes, to update the frequency point numbers in the SG according to the CMCT, after downloading the CMCT.

Furthermore, the control module is configured to download the CMCT of each available frequency point in the following way of: saving all the content of the CMCTs corresponding to all the available frequency points into the same file or table;
the control module is configured to search for the corresponding frequency point number in the content of the CMCT according to the service identification information in the following way of: searching for the corresponding frequency point number in the file or table, in which the content of the CMCT is stored, according to the service identification information.

The present invention will be illustrated in further detail with reference to an application embodiment hereinafter.

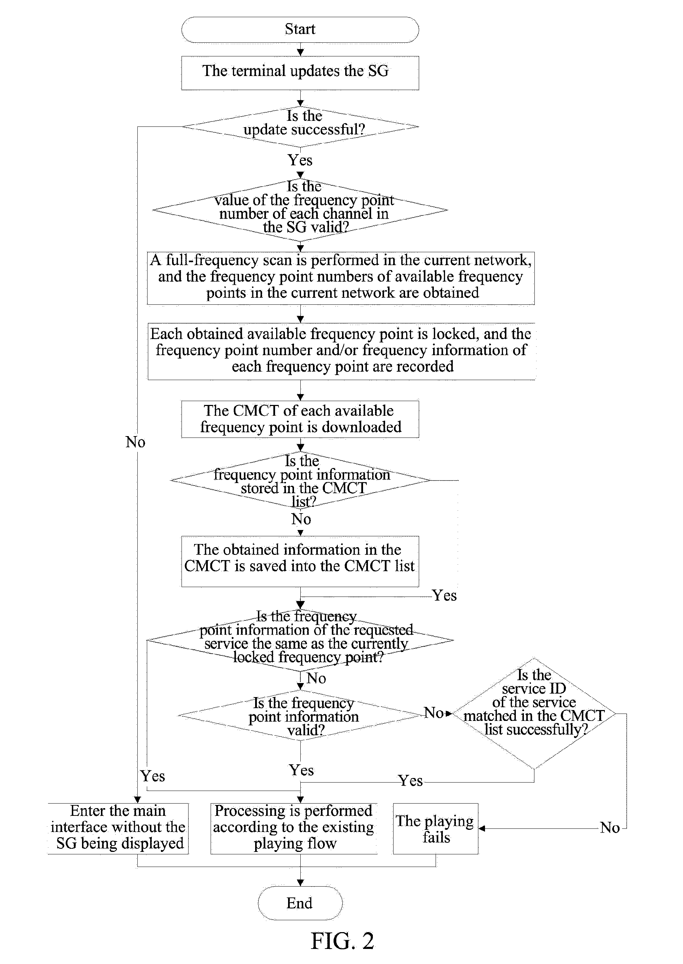

As shown in FIG. 2, the specific embodiment of the technical scheme in accordance with the method of the present invention comprises the following steps:
In step 1, a user selects to enter a mobile television application on a terminal, and the terminal requests a SG server to update the SG after accessing an IP network via a PS domain function; after receiving the SG responded by the SG server, the terminal compares the received SG with the local SG and uses the newer version of the SG; if the update fails, skip to step 12;
In step 2, the SG is traversed, and the value of the frequency point number of each channel is respectively judged whether to be valid or not, if all the values of the frequency point numbers are valid, skip to step 7, otherwise, proceed to step 3;
In step 3, a full-frequency scan is performed in the current network, and the frequency point numbers of available frequency points in the current network are obtained;
a full-frequency scan generally costs about 20 seconds, therefore, the user will wait for a longer time if the full-frequency scan does not start until the user clicks on the play, thus resulting in a bad user experience.
In step 4, each obtained available frequency point is locked, and the frequency point number and/or frequency information of each frequency point are recorded;
In step 5, the CMCT of each available frequency point is downloaded, and it is judged whether the frequency point information is stored in the CMCT list or not, if not, proceed to step 6, otherwise, skip to step 7;
In step 6, the obtained information in the CMCT is saved into the CMCT list;
In step 7, the terminal judges whether the frequency point information of the requested service is the same as the currently locked frequency point or not, if not, proceed to step 8, otherwise, skip to step 10;
In step 8, the terminal judges whether the frequency point information is valid or not, if valid, skip to step 10, otherwise, proceed to step 9;
In step 9, the service ID of the service is matched in the CMCT list, if matched successfully, the corresponding frequency point number is acquired from the CMCT list, and then proceed to step 10, otherwise, skip to step 11;
In step 10, the existing playing process is performed, ending;
In step 11, the playing fails, ending;
In step 12, enter the main interface without the SG.

Of course, there are a plurality of other embodiments. Those skilled in the field can make various corresponding modifications and variations according to the present invention without departing from the spirit and essence of the present invention, and all the corresponding modifications and variations should belong to the scope of the claims of the present invention.

### Industrial Applicability

Compared with the existing technology, services can be broadcasted normally after the present invention is adopted, even if frequency point information is incorrectly configured in some area such as a county-level city, thus giving the user a good user experience; additionally, the time can be saved since the terminal checks the correctness of frequency point information in a SG as soon as it starts up.

## Claims

1. A method for broadcasting a mobile television service, wherein, the method comprises:
a terminal acquiring available frequency point information in a network via a full-frequency scan and downloading a Continual service Multiplex Configuration Table (CMCT) of each available frequency point, when judging that at least one frequency point number is invalid in a local service guide (SG);
after a user selects a service in the SG, if the terminal judges that the frequency point number corresponding to a service in the SG is invalid, the terminal, according to service identification information of the service, searching for a frequency point number corresponding to the service identification information in content of the CMCT, and then processing in accordance with an existing playing flow based on the found frequency point number.

2. The method according to claim 1, wherein, after the step of the terminal, according to service identification information of the service, searching for a frequency point number corresponding to the service identification information in content of the CMCT, the method further comprises: the terminal updating a value of the frequency point number corresponding to the service identification information in the SG with a value of the found frequency point number.

3. The method according to claim 1, further comprising:
the terminal processing in accordance with the existing playing flow based on the frequency point number of the service in the SG, if judging that the frequency point number in the SG corresponding to the service selected by the user is valid.

4. The method according to claim 1 or 3, wherein,
after the step of the terminal downloading the CMCT of each available frequency point, the method further comprises: the terminal using the service identification information as indexes, and updating frequency point numbers in the SG according to the CMCT.

5. The method according to claim 1, further comprising:
the terminal prompting the user of playing failure, if no frequency point number corresponding to the service identification information is found according to the service identification information of the service in the content of the CMCT.

6. The method according to claim 1, 3 or 5, wherein,
the step of downloading the CMCT of each available frequency point comprises: the terminal saving all the content of the CMCTs corresponding to all the available frequency points into a same file or table;
the step of the terminal searching for the frequency point number corresponding to the service identification information in the content of the CMCT according to the service identification information comprises: the terminal searching for the frequency point number corresponding to the service identification information in a file or table in which the content of the CMCT is stored, according to the service identification information.

7. The method according to claim 1 or 3, wherein,
the step of processing in accordance with the existing playing flow based on the found frequency point number comprises:
the terminal judging whether a number of a currently locked frequency point is the same as the found frequency point number or not, if yes, playing the service; otherwise, locking the frequency point corresponding to the found frequency point number again, and then performing the broadcasting process under the re-locked frequency point.

8. A mobile terminal supporting broadcasting a mobile television service, comprising: a human-machine interactive interface, a control module, a China Mobile Multimedia Broadcasting (CMMB) module and a Service Guide (SG) module;
the control module is configured: to save a SG updated and downloaded from a SG sever at a network side; and to acquire available frequency point information in the current network via a full-frequency scan, after receiving a scanning command, and then to download a Continual service Multiplex Configuration Table (CMCT) of each available frequency point;
the SG module is configured to initiate the scanning command to the control module after judging that at least one frequency point number is invalid in the SG stored in the control module;
the human-machine interactive interface is configured: to display the SG stored in the control module to a user; and to send service identification information of a service to the CMMB module via the control module, when the user selects the service in the SG on the human-machine interactive interface;
the CMMB module is configured to, according to the received service identification information, search for the frequency point number corresponding to the service identification information in the SG stored in the control module, and to judge whether the found frequency point number is valid or not; if invalid, to search for the frequency point number corresponding to the service identification information in content of the CMCT according to the service identification information, and to process in accordance with an existing playing flow based on the found frequency point number.

9. The mobile terminal according to claim 8, wherein,
the CMMB module is further configured to update a value of the frequency point number corresponding to the service identification information in the SG with a value of the found frequency point number after finding the frequency point number corresponding to the service identification information in the content of the CMCT according to the service identification information.

10. The mobile terminal according to claim 8, wherein,
the control module is further configured to use the service identification information as indexes, to update the frequency point numbers in the SG according to the CMCT after downloading the CMCT.

11. The mobile terminal according to any of claims 8 to 10, wherein,
the control module is configured to download the CMCT of each available frequency point in the following way of: saving the content of the CMCTs corresponding to all the available frequency points into a same file or table; and
the CMMB module is configured to search for the frequency point number corresponding to the service identification information in the content of the CMCT according to the service identification information in the following way of: searching for the frequency point number corresponding to the service identification information in the file or table in which the content of the CMCT is stored, according to the service identification information.
